# EUROPÄISCHE PATENTSCHRIFT

(11) **EP 1 613 868 B1**
(45) Veröffentlichungstag und Bekanntmachung des Hinweises auf die Patenterteilung: **06.12.2006**
(21) Anmeldenummer: 04723535.3
(22) Anmeldetag: 26.03.2004
(51) Int. Cl.: F16C 29/06, F16C 33/51

(54) **LINEARKUGELLAGER**
LINEAR BALL BEARING
ROULEMENT A BILLES LINEAIRE

(30) Priorität: 11.04.2003 DE 10317049
(43) Veröffentlichungstag der Anmeldung: 11.01.2006
(73) Patentinhaber: Schaeffler KG, 91074 Herzogenaurach (DE)
(72) Erfinder: RUDY, Dietmar, 66501 Kleinbundenbach (DE); MOSEBERG, Ralf, 66862 Kindsbach (DE); HEID, Michael, 66271 Kleinblittersdorf (DE); DANIEL, Patrick, 66459 Kirkel (DE); BAUER, Wolfgang, 66292 Riegelsberg (DE)
(86) Internationale Anmeldenummer: PCT/EP2004/003191
(87) Internationale Veröffentlichungsnummer: WO 2004/090359

(56) Entgegenhaltungen:
- DE-A- 2 618 535
- DE-A- 10 049 578
- US-A- 5 927 858

## Beschreibung

Die vorliegende Erfindung betrifft ein Linearkugellager mit einer auf einer Führungsschiene längs verschieblich geführten Führungswagen.

Aus DE 26 18 535 A1 beispielsweise ist ein Linearkugellager bekannt geworden, mit einem auf einer Führungsschiene längs verschieblich geführten Führungswagen, der an Längsseiten der Führungsschienen über Kugeln wälzgelagert ist. Die Kugeln sind an jeder Längsseite in mindestens zwei parallelen, in endlosen Kugelkanälen umlaufenden Kugelreihen angeordnet. Alle Kugeln sind in Käfigstücken gehalten. In einem Käfigstück sind insgesamt vier Kugeln allseitig gehalten, und zwar zwei Kugeln der einen Reihe und zwei Kugeln der anderen Reihe. Um mögliche Verspannungskräfte auszuschalten, ist vorgesehen, daß die Käfigstücke in Laufrichtung federnd ausgebildet oder mit federnden Mitteln versehen sind. Einander berührende Stirnflächen von einander benachbarten Käfigstücken erstrecken sich nur über einen Teil der Breite der Käfigstücke, um Verformungen an Lappen zu vermeiden, die die Kugeln umgreifen. Wenn diese Lappen unter einem unerwünschten Kontakt verformt werden, kann es zu einem Verklemmen der Kugeln kommen. Die Tatsache, daß die einander berührenden Stirnflächen der Käfigstücke quer zur Laufrichtung gesehen sich nur über einen geringen Teil der Breite des Käfigstückes erstrecken, begünstigt ein unerwünschtes Verkippen dieses Käfigstückes. Allerdings wird bei diesen bekannten Linearkugellagern ein Verkippen dadurch verhindert, daß in einem gemeinsamen Käfigstück je zwei Kugeln beider Kugelreihen, also insgesamt vier Kugeln gehaltert sind. Nachteilig bei diesem bekannten Käfig ist jedoch, daß aufgrund der in Laufrichtung erforderlichen großen Erstreckung des Käfigstückes enge Umlenkradien im Umlenkbereich des Linearkugellagers nur schwierig zu bewältigen sind.

Aufgabe der vorliegenden Erfindung ist es daher, ein Linearkugellager nach den Merkmalen des Oberbegriffs des Anspruchs 1 anzugeben, bei dem dieser Nachteil behoben ist. Erfindungsgemäß wird diese Aufgabe dadurch gelöst, daß das Käfigstück genau zwei Käfigtaschen für jeweils eine Kugel aus beiden Kugelreihen, das heißt für genau ein Paar von Kugeln beider Kugelreihen aufweist, wobei in Laufrichtung der Kugeln gesehen jedes Käfigstück an beiden Enden mit konvex geformten Endflächen für den Kontakt mit Endflächen benachbarter Käfigstücke versehen ist, welche Endflächen sich im wesentlichen bis zu den Käfigstückseiten erstrecken.

Die Erfindung verzichtet auf Federelemente, wie sie beim Stand der Technik erforderlich sind. Mit der Erfindung sind sehr enge Umlenkradien für die Käfigstücke möglich, da die Käfigstücke in Laufrichtung der Kugeln gesehen nur noch einen geringen Bauraumbedarf haben. Die Tatsache, daß von beiden Kugelreihen jeweils eine Kugel in einem gemeinsamen Käfigstück angeordnet sind, würde ohne weitere Maßnahmen ein seitliches Verkippen der Käfigstücke begünstigen. Die erfindungsgemäß sich bis zu den Käfigstückseiten erstreckenden Endflächen verhindern jedoch die Gefahr eines seitlichen Verkippens der Käfigstücke.

Vorzugsweise sind die beiden Käfigtaschen des Käfigstücks durch einen Steg einstückig miteinander verbunden, dessen voneinander abgewandte und zur Laufrichtung der Kugeln im wesentlichen parallel angeordnete Stegseiten mit Kontaktflächen zum Führen des Käfigstücks an Führungsflächen des Führungswagens versehen sind. Bei diesem weitergebildeten erfindungsgemäßen Linearkugellager ist die Gefahr eines Verkippens des Käfigstücks noch weiter reduziert. Die mit den Kontaktflächen versehenen Stegseiten können einwandfrei an den Führungsflächen des Führungswagens geführt werden. Der Lauf der Kugeln durch die endlosen Kugelkanäle ist insgesamt einwandfrei gewährleistet, wobei mit dem erfindungsgemäßen Linearkugellager enge Umlenkradien für die Käfigstücke möglich sind.

Die Endflächen der Käfigstücke weisen vorzugsweise ein teilzylindrisches Profil auf, dessen Zylinderachse quer zur Laufrichtung der Kugeln und parallel zu einer Ebene angeordnet ist, in der die beiden Kugelreihen an der Längsseite liegen.

Nachstehend wird die Erfindung anhand eines in insgesamt sechs Figuren dargestellten Ausführungsbeispiels näher erläutert. Es zeigen:
- Figur 1: eines erfindungsgemäßes Linearkugellager im Teilschnitt,
- Figur 1a: eine Einzelheit des Linearkugellagers aus Figur 1,
- Figur 2: das erfindungsgemäße Linearkugellager aus Figur 1 in einer Seitenansicht,
- Figur 3: als Einzelheit ein Käfigstück des erfindungsgemäßen Linearkugellagers gemäß den Figuren 1 und 2
- Figur 4: das Käfigstück aus Figur 3, jedoch mit eingesetzten Kugeln und
- Figur 5: mehrere hintereinander angeordnete Käfigstücke mit eingesetzten Kugeln

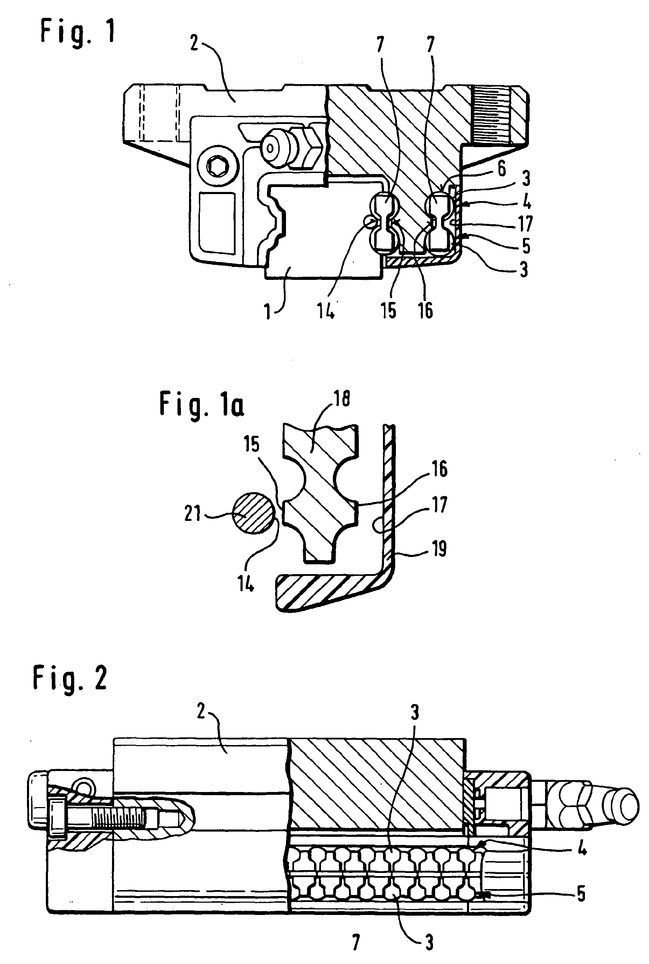

Die Figuren 1, 1a und 2 zeigen ein erfindungsgemäßes Linearkugellager im Schnitt- und in Seitenansicht. An einer Führungsschiene 1 ist ein Führungswagen 2 über Kugeln 3 längsverschieblich abgestützt. Der Führungswagen 2 enthält insgesamt vier umlaufende Kugelreihen 4 und 5. Im Schnitt sind davon nur zwei Kugelreihen 4 und 5 auf einer Seite dargestellt. Die Kugelreihe 4 ist die obere Reihe während die Kugelreihe 5 die untere Reihe ist. Der in Figur 2 dargestellte Führungswagen 2 ist symmetrisch aufgebaut. Die Führungsschiene 1, auf welcher der Führungswagen 2 in axialer Richtung verschiebbar ist, ist als Profilschiene ausgebildet. Die Verschiebung wird durch das Abwälzen der Kugeln 3 an der Führungsschiene 1 und dem Führungswagen 2 ermöglicht.

Bei der axialen Verschiebung laufen die Kugeln 3 im Führungswagen 2 in endlosen Kugelkanälen 6 um. Beim Verschieben des Führungswagens 2 könnten die Kugeln 3 bei einer Ausführung ohne Distanzstücke gegeneinander schlagen und somit Geräusche verursachen. Zur Verhinderung einer solchen Geräuschbildung werden die Kugeln 3 durch Käfigstücke 7 voneinander getrennt.

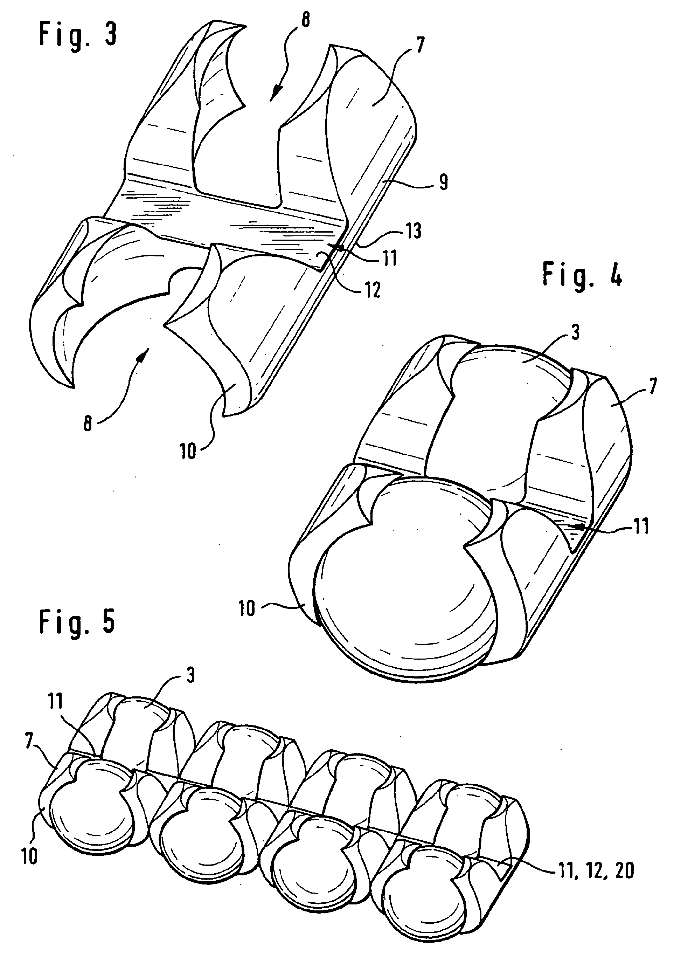

Jede Kugel 3 der einen Kugelreihe 4 bildet mit einer benachbarten Kugel 3 der anderen Kugelreihe 5 ein Paar, das in Käfigtaschen 8 eines gemeinsamen Käfigstücks 7 allseitig gehalten ist. Die Käfigtaschen 8 umfassen die Kugeln 3 kalottenförmig. Das Käfigstück 7 weist genau zwei Käfigtaschen 8 für genau ein Paar von Kugeln 3 beider Kugelreihen 4, 5 auf. In Laufrichtung der Kugeln 3 gesehen ist jedes Käfigstück 7 an beiden Enden mit konvex geformten Endflächen 9 für den Kontakt mit den Endflächen 9 benachbarter Käfigstücke 7 versehen. Die Endflächen 9 erstrecken sich im wesentlichen bis zu den Käfigstückseiten 10; ein seitliches Verkippen eines Käfigstücke 10 wird vermieden, da sich das eine Käfigstück 10 an dem benachbarten Käfigstück 10 im Kontakt mit den Endflächen 9 abstützen kann. In anderen Worten: Vorliegend erstrecken sich die Endflächen 9 über die gesamte Breite des Käfigstücks 7. Das Käfigstück 7 ist besonders anschaulich in perspektivischen Darstellungen in den Figuren 3 und 4 abgebildet.

Die beiden Käfigtaschen 8 des Käfigstücks 7 sind durch einen flachen Steg 11 einstückig miteinander verbunden. Voneinander abgewandte und zur Laufrichtung der Kugel 3 im Wesentlichen parallel angeordnete Stegseiten sind mit Kontaktflächen 12, 13 zum Führen des Käfigstücks 7 an Führungsflächen 14, 15, 16, 17 des Führungswagens 2 versehen. Die Figur 1a zeigt einen Ausschnitt des erfindungsgemäßen Linearkugellagers aus Figur 1. In dieser Figur erkennbar ist ein Schenkel 18 des Führungswagens 2. Die Führungsflächen 15, 16 sind unmittelbar an dem Schenkel 18 ausgebildet. Die Führungsfläche 14 ist an einem Draht 21 ausgebildet, der an Enden des Führungswagens 2 befestigt ist. Die Führungsfläche 17 ist an einer Abdeckung 19 ausgebildet.

Die Endflächen 9 des Käfigstücks 7 weisen ein teilzylindrisches Profil auf, dessen Zylinderachse quer zur Laufrichtung der Kugeln 3 und parallel zu einer Ebene angeordnet ist, in der die beiden Kugelreihen einer Längsseite liegen. Einander berührende Endflächen 9 von einander benachbarten Käfigstücken 7 können auch bei engen Umlenkradien einwandfrei aneinander abwälzen ohne das die Gefahr eines Verkantens oder eines seitlichen Ausweichens besteht.

In Figur 4 ist deutlich zu erkennen, daß die Käfigtaschen 8 die Kugeln 3 allseitig umschließen.

Figur 5 zeigt mehrere der hintereinander angeordneten Käfigstücke 7, deren Endflächen 9 einander berühren. Die flachen Stege 11 bilden gemeinsam ein endloses Stegband 20.

### Positionszahlenliste

- 1: Führungsschiene
- 2: Führungswagen
- 3: Kugel
- 4: Kugelreihe
- 5: Kugelreihe
- 6: Kugelkanal
- 7: Käfigstück
- 8: Käfigtasche
- 9: Endfläche
- 10: Käfigstückseite
- 11: Steg
- 12: Kontaktfläche
- 13: Kontaktfläche
- 14: Führungsfläche
- 15: Führungsfläche
- 16: Führungsfläche
- 17: Führungsfläche
- 18: Schenkel
- 19: Abdeckung
- 20: Stegband
- 21: Draht

## Patentansprüche

1. Linearkugellager mit einem auf einer Führungsschiene (1) längsverschieblich geführten Führungswagen (2), der an Längsseiten der Führungsschiene (1) über Kugeln (3) wälzgelagert ist, die an jeder Längsseite in mindestens zwei parallelen, in endlosen Kugelkanälen (6) umlaufenden Kugelreihen (4, 5) angeordnet sind, wobei jede Kugel (3) der einen Kugelreihe (5) mit einer benachbarten Kugel (3) der anderen Kugelreihe (4) in Käfigtaschen (8) eines gemeinsamen Käfigstücks (7) allseitig gehalten sind, **dadurch gekennzeichnet, daß** das Käfigstück (7) genau zwei Käfigtaschen (8) für je eine Kugel (3) aus beiden Kugelreihen (4, 5) aufweist, wobei in Laufrichtung der Kugeln (3) gesehen jedes Käfigstück (7) an beiden Enden mit konvex geformten Endflächen (9) für den Kontakt mit den Endflächen (9) benachbarter Käfigstücke (7) versehen ist, welche Endflächen (9) sich im wesentlichen bis zu den Käfigstückseiten (10) erstrecken.

2. Linearkugellager nach Anspruch 1, bei dem die beiden Käfigtaschen (8) des Käfigstücks (7) durch einen Steg (11) einstückig miteinander verbunden sind, dessen voneinander abgewandte und zur Laufrichtung der Kugeln (3) im wesentlichen parallel angeordnete Stegseiten mit Kontaktflächen (12, 13) zum Führen des Käfigstücks (7) an Führungsflächen (14, 15, 16, 17) des Führungswagens (2) versehen sind.

3. Linearkugellager nach Anspruch 1, bei dem die Endflächen (9) ein teilzylindrisches Profil aufweisen, dessen Zylinderachse quer zur Laufrichtung der Kugeln (3) und parallel zu einer Ebene angeordnet ist, in der die beiden Kugelreihen (4, 5) einer Längsseite liegen.

## Claims

1. Linear ball bearing having a guide carriage (2) which is guided on a guide rail (1) in a longitudinally displaceable manner and is mounted in rolling contact on longitudinal sides of the guide rail (1) via balls (3) which are arranged on each longitudinal side in at least two parallel ball rows (4, 5) encircling in endless ball channels (6), each ball (3) of the one ball row (5) together with an adjacent ball (3) of the other ball row (4) being held all round in cage pockets (8) of a common cage piece (7), **characterized in that** the cage piece (7) has exactly two cage pockets (8) for one ball (3) each from both ball rows (4, 5), each cage piece (7), as viewed in the running direction of the balls (3), being provided at both ends with convexly curved end surfaces (9) for contact with the end surfaces (9) of adjacent cage pieces (7), which end surfaces (9) extend essentially up to the cage piece sides (10).

2. Linear ball bearing according to Claim 1, in which the two cage pockets (8) of the cage piece (7) are connected to one another in one piece by a web (11) whose web sides facing away from one another and arranged essentially parallel to the running direction of the balls (3) are provided with contact surfaces (12, 13) for guiding the cage piece (7) on guide surfaces (14, 15, 16, 17) of the guide carriage (2).

3. Linear ball bearing according to Claim 1, in which the end surfaces (9) have a partly cylindrical profile, the cylinder axis of which is arranged transversely to the running direction of the balls (3) and parallel to a plane in which the two ball rows (4, 5) of a longitudinal side lie.

## Revendications

1. Palier linéaire à billes qui présente un chariot de guidage (2) guidé à coulissement longitudinal sur un rail de guidage (1) et monté sur les côtés longitudinaux du rail de guidage (1) par l'intermédiaire de billes (3) disposées sur chaque côté longitudinal en au moins deux séries périphériques parallèles (4, 5) de billes dans des canaux sans fin (6) de billes, chaque bille (3) d'une des séries (5) de billes étant maintenue sur tous ses côtés avec une bille (3) voisine de l'autre série (4) de billes dans des poches (8) d'une pièce commune (7) de cage, **caractérisé en ce que** la pièce (7) de cage présente exactement deux poches (8) pour chaque bille (3) des deux séries (4, 5) de billes, chaque pièce (7) de cage vue dans le sens de roulement des billes (3) étant dotée à ses deux extrémités de surfaces d'extrémité (9) de forme convexe qui assurent le contact avec les surfaces d'extrémité (9) de pièces (7) voisines de cage, ces surfaces d'extrémité (9) s'étendant essentiellement jusqu'au côté (10) des pièces de cage.

2. Palier linéaire à billes selon la revendication 1, dans lequel les deux poches (8) de la pièce (7) de cage sont reliées l'une à l'autre d'un seul tenant par une traverse (11) dont les côtés non tournés l'un vers l'autre et disposés essentiellement en parallèle à la direction de lancement des billes (3) sont dotés de surfaces de contact (12, 13) qui guident la pièce (7) de cage sur des surfaces de guidage (14, 15, 16, 17) du chariot de guidage (2).

3. Palier linéaire à billes selon la revendication 1, dans lequel les surfaces d'extrémité (9) ont un profil en forme de partie d'un cylindre dont l'axe est disposé transversalement par rapport à la direction d'avancement des billes (3) et parallèlement à un plan dans lequel les deux séries (4, 5) de billes d'un côté longitudinal sont situées.
